# EUROPEAN PATENT SPECIFICATION

(11) **EP 1 798 016 B1**
(45) Date of publication and mention of the grant of the patent: **18.03.2009**
(21) Application number: 06025775.5
(22) Date of filing: 13.12.2006
(51) Int. Cl.: B29C 45/14, D06F 37/00, F16C 35/077

(54) **Bearing-holder support for rotating elements**
Lagerhalterung für rotierende Elemente
Support de palier pour éléments tournants

(30) Priority: 14.12.2005 IT TO20050868
(43) Date of publication of application: 20.06.2007
(73) Proprietor: Aktiebolaget SKF, 415 50 Göteborg (SE)
(72) Inventor: Mola, Roberto, 10129 Torino (IT); Scaltriti, Gianpiero, 10135 Torino (IT); Gallucci, Francesco, 10040 Volvera (TO) (IT)
(74) Representative: Fioravanti, Corrado

(56) References cited:
- WO-A-20/04082919
- DE-C1- 10 040 319
- GB-A- 1 226 546

## Description

The present invention refers to a bearing-holder support for rotating elements.

The present invention has advantageous applications in the field of bearing-holder supports for rotating elements such as washing machines, or rather washing machine drums, or textile machines, or rather the spindles of textile machines.

By means of providing an example, the following description will refer to washing machines, but may also be transferred to the field of textile machines mutatis mutandis.

As shown in the drawing which is entitled "Prior Art", cf. EP-A-219 115, bearing-holder supports for a washing machine 5 of a well-known kind present a longitudinal axis A, and are interposed between a tub 6 and a motor shaft 11 of the drum 7 in order to permit the rotation of the motor shaft 11 and the drum 7 themselves in relation to the tub 6. In the more particular case of front loading washing machines, or rather in the case that the drum 7 is supported in such a way as to overhang, the bearing-holder supports must entirely support the weight and dynamic stress of the drum 7, and comprise a substantially cylindrical metal tube 14 which extends along the axis A and which is inserted inside a cylindrical jacket 15 of the tub 6, two rolling contact bearings 12 and 13 which are mounted inside respective annular housings 12a and 13a which are obtained in the metal tube 14 and are arranged along the axis A, and a cylindrical spacer 16 which is interposed between the two bearings 12 and 13 in order to maintain the two bearings 12 and 13 themselves at a determined axial distance from each other.

The European patent No. 0 043 429 describes a bearing-holder support, which is defined by a metallic tube and is provided with two annular housings and an axial spacer obtained by direct working of the metallic tube itself-together with the two housings.

In particular, each annular housing is produced separately from the other annular housing by means of chip removal working starting directly from the metallic tube in such a way as to produce, consequently, the spacer as well, and the bearings are subsequently forced inside the relative housing once the metallic tube has been housed in its final position inside the washing machine.

It is immediately evident that the construction and production of such a bearing support and the relative washing machine is both complicated and extremely expensive.

The European patent No. 0 219 115 likewise describes a bearing-holder support which, as is effectively illustrated in the drawing entitled "Prior Art", is also produced in such a way as to compensate for the disadvantages of the support which is described in the European patent No. EP 0 043 429, and is defined by a plastic tube 14 which is co-moulded together with the two bearings 12 and 13 and the spacer 16 which is also made of plastic material.

In particular, the spacer 16 which is made of plastic material is produced independently inside a first mould and, subsequently, is positioned together with the two bearings 12 and 13 inside a second mould, into which is injected some plastic material which has different mechanical characteristics from the plastic material which is used to produce the spacer 16 itself.

The bearing-holder support which is described in European patent No. 0 219 115, while resolving the technical problem which are presented by the bearing-holder support which is described in the European patent No. 0 043 429, is still not easy and cost-effective to construct and produce, and it also involves further disadvantages such as, for example, the need to block both the bearings during the mounting of the bearing-holder support into the washing machine although the European patent No. 0 219 115 also describes a third mould for the production of the drum and the jacket 15 for co-moulding with the bearing-holder support.

The aim of the present invention is to produce a bearing-holder support, which will be both simple and cost-effective to produce and which will involve the smallest possible number of working and assembly phases.

According to the present invention, a bearing-holder support for rotating elements will be produced, the bearing-holder support being suitable for being engaged by a shaft and comprising two rolling contact bearings, and a tubular plastic tube which extends along a longitudinal axis of the shaft and presents two inner annular housings for housing the said two bearings; the plastic tube made up of two modular portions, each of which presents a respective annular housing which is obtained by co-moulding the modular portion itself with a respective bearing in order to axially block the bearing itself inside the annular housing itself, see DE-C-100 40 319.

The present invention defined by all of the features of claim 1 will now be described with reference to the attached drawings, which illustrate a non-limiting form of embodiment of the present invention, and in which:
- FIG. 1: is a lateral elevation view of a first preferred form of embodiment of the bearing-holder support according to the present invention;
- FIG. 2: illustrates a section according to the line II-II which is shown in FIGURE 1;
- FIG. 3: is a perspective view of a second preferred form of embodiment of the bearing-holder support of according to the present invention; and
- FIG. 4 and 5: illustrate in a perspective way relevant sections of the bearing-holder support as shown in FIGURE 3.

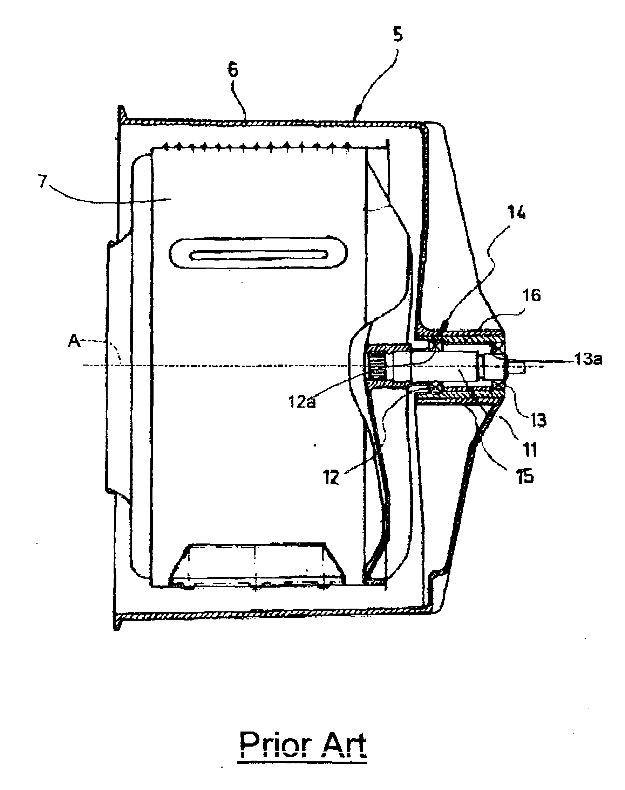

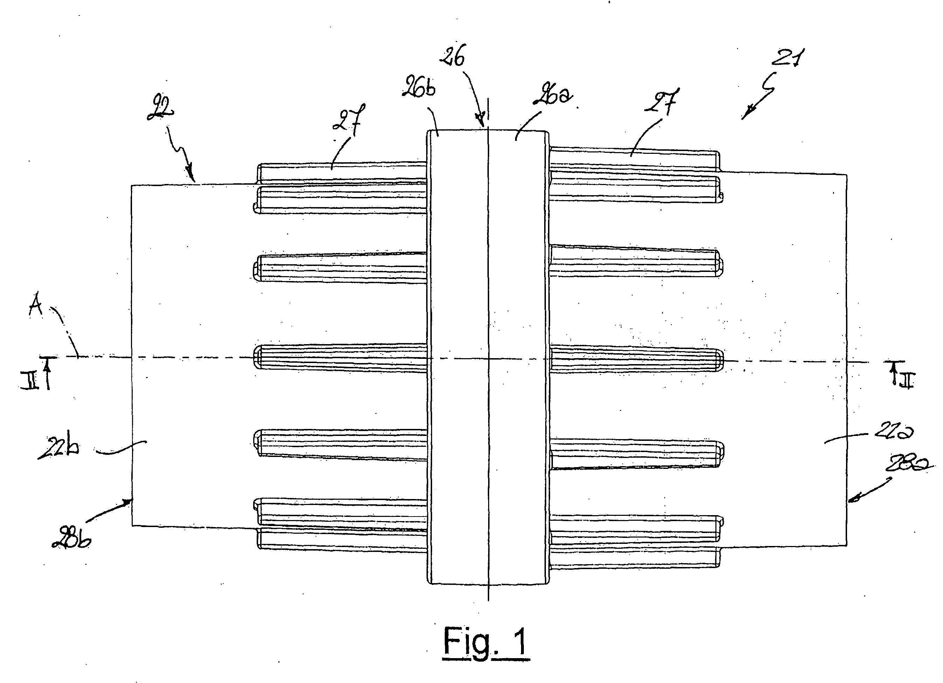

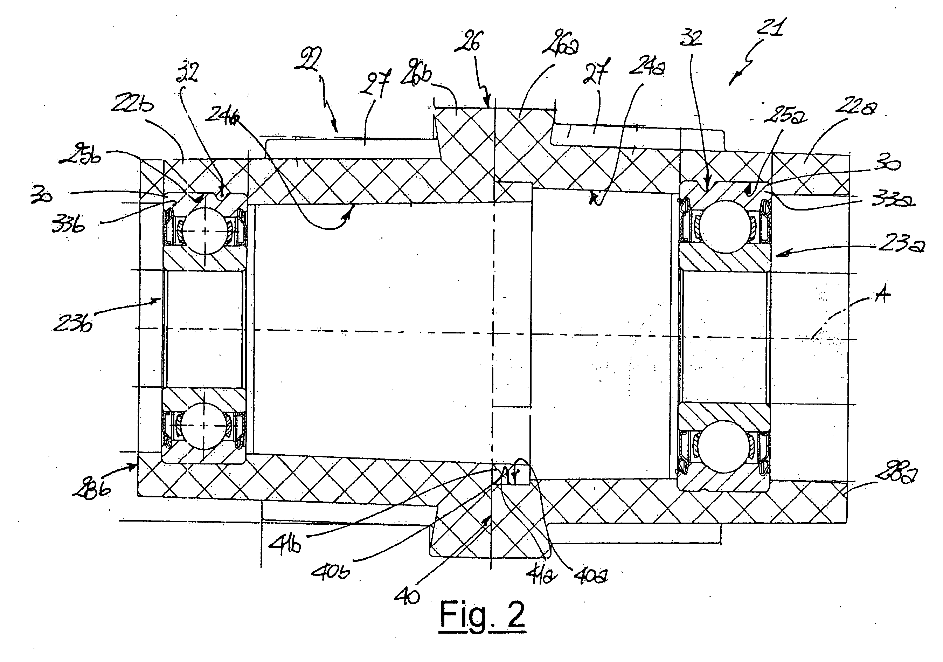

With reference to FIGURES 1 and 2, and using the same reference numbers to designate the same or similar parts which are described in the preamble to the description, the number 21 refers to a bearing-support holder in its entirety for rotating element which is defined by a drum of a front loading washing machine , comprising also a tub , the drum , and a motor shaft for the activation of the drum itself.

The tub is made of plastic material and presents, on the side opposite the loading side, a tubular jacket, which extends along the axis A, and inside which the bearing-holder support 21 is suitable for being housed in order to be engaged in passing fashion by the motor shaft, and in order to permit the rotation of the drum which is mounted in such a way as to overhang the shaft itself.

The support 21 comprises a tube 22 which is made of plastic material, and two rolling contact bearings 23a and 23b, which are housed, as is better described in the following, inside the tube 22 itself, and which comprise respective outer races 33a e 33b which are co-axial to the axis A.

The tube 22 is made up of two semi-tube 22a and 22b which are modular in relation to each other, each of which presents a respective substantially cylindrical inner compartment 24a and 24b, and is provided with a respective annular housing 25a and 25b which is obtained, together with the relative compartment 24a, 24b, by co-moulding of the portion 22a, 22b itself with a relative bearing 23a, 23b.

Each housing 24a and 24b axially blocks the relative bearing 23a, 23b, and partially houses in its own interior an outer radial portion 30 of the race 33a, 33b of the relative bearing 23a, 23b.

The co-moulding of each bearing 23a and 23b together with the relative semitube 22a and 22b permits the inclusion of the radial outer portion 30 of each race 33a and 33b directly inside the plastic structure of the tube 22. In addition, with the aim of improving the grip of each bearing 23a and 23b as much as possible inside the relative housing 25a and 25b, each race 33a and 33b presents an annular peripheral groove 32, which is radially open towards the outside in order to be filled with plastic material during the co-moulding process, and presents a variable radial depth as it is obtained in an eccentric position in relation to the axis of the bearing 23a, 23b.

Each semitube 22a and 22b is axially delimited on one side by a respective annular border 28a and 28b, and on the side opposite the relative border 28a and 28b, by a respective assembly flange 26a, 26b, which is arranged in such a way as to axially abut the other flange 26b, 26a and to form with the other flange 26b, 26a and outer projection 26 for the tube 22. The projection 26 presents in a passing section through the axis A, a substantially trapezoid shape which tapers radially towards the axis A itself, and from this projection 26 depart, towards each border 28a, 28b, a number of outer ribs 27, which are produced during the moulding of each semitube 22a and 22b parallel to the axis A, and which are uniformly distributed around the axis A itself.

According to what is better illustrated in FIGURE 2, each semitube 22a and 22b presents a respective centering element 40a and 40b for reciprocal centering and for centering each semitube 22a and 22b in relation to the longitudinal axis A hence assuring the alignment of the two bearings 23a and 23b.

The centering element 40a of the semitube 22a is defined by a cylindrical housing 41a which is obtained inside the relative flange 26a, while the centering element 40b of the semitube 22b is defined by a ring 41b, which extends in such a way as to overhang the relative flange 26b, and is inserted inside the relative housing 41a.

The coupling between the elements 40a and 40b, or rather the insertion of the ring 41b into the housing 41a, and the positioning of the two flanges 26a and 26b in such a way that they abut each other and are axially one against the other guarantees the relative position of the two bearings 23a and 23b in relation to each other in an axial direction, or rather along the axis A.

It is obvious from the above description that the production of the support 21 which is obtained by co-moulding each bearing 23a and 23b together with the relative semitube 22a and 22b permits, firstly, a stable axial blocking of the bearings 23a and 23b themselves without the intervention of additional external elements, and, secondly, the co-axial nature of the two bearings 23a and 23b, in that when co-moulding the plastic tub 6 onto the tube 22, the two bearings 23a and 23b are supported by a shaft which assures their co-axial nature, and the two semitubes 22a and 22b self adapt due to the effect of the minimum play which is present in the coupling between the elements 40a and 40b.

In addition, the co-moulding of the bearings 23a and 23b with the semitubes 22a and 22b not only renders more robust the anchoring of the bearings 23a and 23b themselves in the relative housings 25a and 25b, but is also a much simpler and faster alternative in comparison with the solutions which have been described in the introduction above.

Finally, it is herein opportune to stress that the additional co-moulding phase of the tube 22 with the tub 6 means that it is easy to obtain a single piece to be assembled with the washing machine 5.

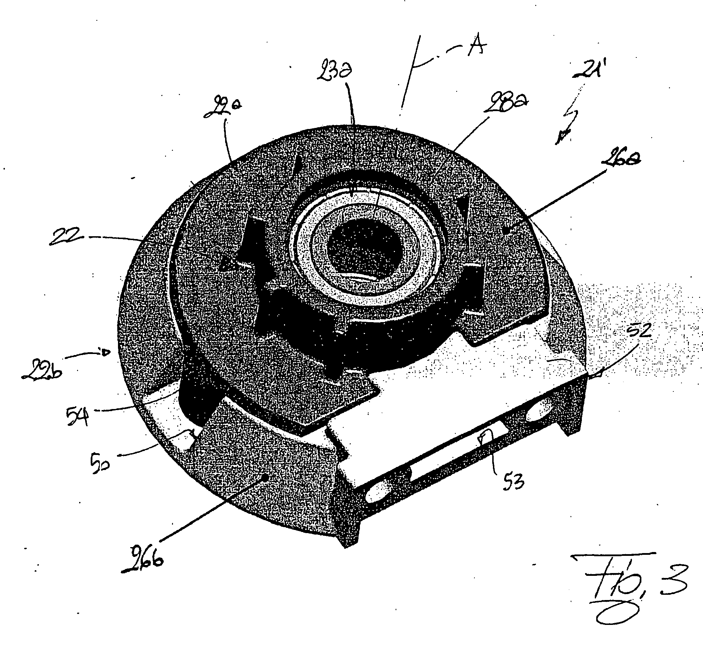

The form of embodiment which is illustrated in FIGURE 3 relates to a bearing-holder support 21' for rotating elements which is the same as the support 21 from the construction and conceptual point of view, but from which the support 21' differs due to the fact that while it is made of plastic material by means of co-moulding with the two bearings 23a and 23b it does not need to be subsequently co-moulded with any tub, but must be engaged along the axis A of a support shaft of a spindle which is noted, but not illustrated), which is part of a textile machine and which is suitable for rotating around the A axis itself.

Also the support 21' comprises:
- a tube 22 which is made of plastic material and is made up of two semi-tube 22a and 22b; and
- two rolling contact bearings 23a e 23b, which are housed inside the tube 22 co-axially to the axis A, and, more particularly, are housed inside the relevant annular housings 25a and 25b which are obtained by co-moulding of the semi-tubes 22a and 22b with the bearings 23a and 23b themselves.

The co-moulding of each bearing 23a and 23b together with the relative semitube 22a and 22b allows the inclusion of the radial outer portion 30 of each race 33a and 33b directly inside the plastic structure of the tube 22 and allows to block axially the relative bearing 23a and 23b.

Each semitube 22a and 22b of the support 21' is axially delimited on one side by the relevant annular border 28a and 28b, and on the side opposite the relevant border 28a and 28b, by a respective assembly flange 26a, 26b, which is arranged in such a way as to axially abut the other flange 26b, 26a.

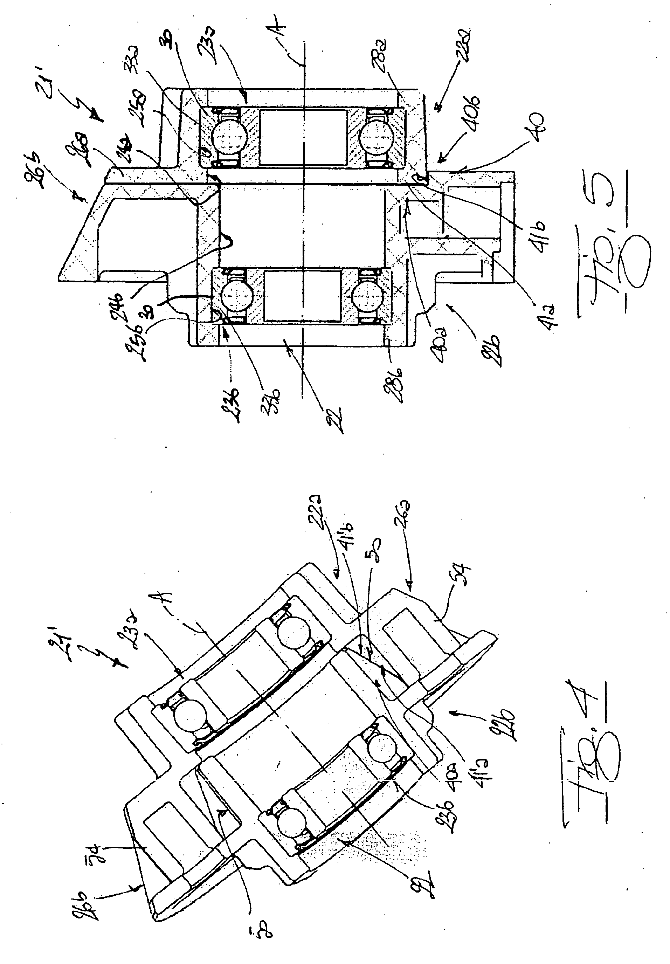

The flange 26b, which in use is placed vertically under the flange 26a, is axially thicker than the flange 26a itself and, according to what is better illustrated in FIGURE 4, comprises two seats 50 which are placed opposite to each other with respect to the axis A and which are opened both radially and axially towards the outside and towards the flange 26a. The flange 26b also comprises a connecting portion 52 which is crossed by a feeding channel 53 for grease.

The flange 26a comprises two axial tubular elements 54 which are placed inside the seats 50 and which are internally threaded.

According to what is better illustrated in FIGURES 4 and 5, each semitube 22a and 22b of the support 21' presents a relevant centering element 40a and 40b for reciprocal centering and for centering each semitube 22a and 22b in relation to the longitudinal axis A hence assuring the alignment of the two bearings 23a and 23b.

The centering element 40a of the semitube 22a is defined both by a housing 41a which is obtained inside the relative flange 26a and by a tapered surface 41'a which is housed inside one of the two seats 50, while the centering element 40b of the semitube 22b is defined both by a border 41b, which extends in such a way as to overhang the relative flange 26b, and is inserted inside the relative housing 41a. and by a tapered surface 41'b which is placed outside one of the two axial tubular elements 54.

The relative position of the two bearings 23a and 23b in relation to each other in an axial direction, or rather along the axis A is guaranteed by:
- the coupling between the elements 40a and 40b, or rather the insertion of the border 41b into the housing 41a and of the surface 41'b against the surface 41' a; and
- the positioning of the two flanges 26a and 26b in such a way that they abut each other and are axially one against the other.

It is obvious from the above description that the production of the support 21' which is obtained by co-moulding each by co-moulding each bearing 23a and 23b together with the relative semitube 22a and 22b allows a stable axial blocking of the bearings 23a and 23b themselves without the intervention of additional external elements.

## Claims

1. Bearing-holder support (21 21') for rotating elements, the bearing-holder support (21) (21') being suitable for being engaged by a shaft, and comprising two rolling contact bearings (23a, 23b), and a tubular plastic tube (22) which extends along a longitudinal axis (A) of the shaft and which is made up of two modular portions (22a, 22b), each one of them presenting a respective inner annular housing (25a, 25b) for housing the said two bearings (23a, 23b), wherein each one of the two annular housings (25a) (25b) is obtained by co-moulding the respective modular portion (22a) (22b) itself with a respective bearing (23a, 23b) in order to axially block the bearing (23a, 23b) itself inside the annular housing (25a, 25b) and wherein each said modular portion (22a, 22b) comprises a respective assembly flange (26a, 26b), **characterised by** the assembly flange (26a) of one of the modular portion (22a) arranged in such a way as to axially abut the assembly flange (26b) of the other modular portion (22b) for its assembly with the other modular portion (22b) means of contact surfaces of the respective flanges extending perpendicularly to the shaft axis (A).

2. Bearing-holder support according to Claim 1, **characterised by** the fact that each said modular portion (22a, 22b) comprises a respective centering element (40a, 40b) for reciprocal centering with regard to the said longitudinal axis (A).

3. Bearing-holder support according to Claim 2, **characterised by** the fact that a first centering element (40a) is defined by a housing (41a) which is obtained inside the relative assembly flange (26a) of a first modular portion (22a) of the said two modular portions (22a) (22b).

4. Bearing-holder support according to Claim 3, **characterised by** the fact that a second-centering element (41b) is defined by an overhanging ring (41b) which is integral with the outside of the relative assembly flange (26b) of the second modular portion (22b) of the said two modular portions (22a)(22b).

5. Bearing-holder support according to Claim 3 or 4, **characterised by** the fact that the housing of the first centering element (40a) is cylindrical.

6. Bearing-holder support according to Claim 3, **characterised by** the fact that a second centering element (41b) is defined by an overhanging border (41b) which is integral with the outside of the relative assembly flange (26b) of the second modular portion (22b) of the said two modular portions (22a) (22b) .

7. Bearing-holder support according to Claim 6, **characterised by** the fact that the assembly flange (26b) of the second modular portion (22b) comprises two seats (50) which are placed opposite to each other with respect to the axis A and which are opened both radially and axially towards the outside and towards the assembly flange (26a) of the first modular portion (22a).

8. Bearing-holder support according to Claim 7, **characterised by** the fact that the assembly flange (26a) of the first modular portion (22a) comprises two axial tubular elements (54) which are placed inside the seats (50).

9. Bearing-holder support according to Claim 7, **characterised by** the fact that the first centering element (40a) is also defined by a first tapered surface (41'a) which is housed inside one of the two seats (50).

10. Bearing-holder support according to Claim 8, **characterised by** the fact that the second centering element (40b) is also defined by a second tapered surface (41'b) which is placed outside one of the two axial tubular elements (54) to match with the said first tapered surface (41'a).

11. Bearing-holder support according to any of the preceding Claims whatsoever, **characterised by** the fact that each of the said bearings (23a)(23b) comprises an outer race (33a)(33b) which is provided with an annular groove (32) radially open towards the outside; said annular groove (32) being filled with plastic material during the co-moulding of the bearing (23a)(23b) with the relative assembly portion.

## Patentansprüche

1. Lagerhalterunterstützung (21, 21') für rotierende Elemente, wobei die Lagerhalterunterstützung (21, 21') geeignet ist, mittels einer Welle in Eingriff zu gelangen, und zwei Wälzkontaktlager (23a, 23b) und ein rohrförmiges Kunststoffrohr (22) umfasst, das sich längs einer Längsachse (A) der Welle erstreckt und aus zwei modularen Abschnitten (22a, 22b) gebildet ist, von denen jeder ein entsprechendes inneres ringförmiges Gehäuse (25a, 25b) zum Aufnehmen der zwei Lager (23a, 23b) darstellt, wobei jedes der zwei ringförmigen Gehäuse (25a, 25b) erhalten wird durch gemeinsames Gießen des jeweiligen modularen Abschnitts (22a, 22b) selbst mit einem entsprechenden Lager (23a, 23b), um das Lager (23a, 23b) selbst innerhalb des ringförmigen Gehäuses (25a, 25b) axial zu blockieren, und wobei jeder modulare Abschnitt (22a, 22b) einen entsprechenden Montageflansch (26a, 26b) umfasst, **dadurch gekennzeichnet, dass** der Montageflansch (26a) von einem Halteabschnitt (22a) so angeordnet ist, dass er axial am Montageflansch (26b) des anderen modularen Abschnitts (22b) anliegt, für dessen Montage mit dem anderen modularen Abschnitt (22b) mittels Kontaktflächen der jeweiligen Flansche, die sich senkrecht zur Wellenachse (A) erstrecken.

2. Lagerhalterunterstützung nach Anspruch 1, **dadurch gekennzeichnet, dass** jeder modulare Abschnitt (22a, 22b) ein entsprechendes Zentrierelement (40a, 40b) zum gegenseitigen Zentrieren bezüglich der Längsachse (A) umfasst.

3. Lagerhalterunterstützung nach Anspruch 2, **dadurch gekennzeichnet, dass** ein erstes Zentrierelement (40a) durch ein Gehäuse (41 a) definiert ist, das innerhalb des jeweiligen Montageflansches (26a) des ersten modularen Abschnitts (22a) der zwei modularen Abschnitte (22a, 22b) erhalten wird.

4. Lagerhalterunterstützung nach Anspruch 3, **dadurch gekennzeichnet, dass** ein zweites Zentrierelement (41 b) durch einen überhängenden Ring (41 b) definiert ist, der integral mit der Außenseite des jeweiligen Montageflansches (26b) des zweiten modularen Abschnitts (22b) der zwei modularen Abschnitte (22a, 22b) ausgebildet ist.

5. Lagerhalterunterstützung nach Anspruch 3 oder 4, **dadurch gekennzeichnet, dass** das Gehäuse des ersten Zentrierelements (40a) zylindrisch ist.

6. Lagerhalterunterstützung nach Anspruch 3, **dadurch gekennzeichnet, dass** ein zweites Zentrierelement (41 b) durch einen überhängenden Rand (41 b) definiert ist, der integral mit der Außenseite des jeweiligen Montageflansches (26b) des zweiten modularen Abschnitts (22b) der zwei modularen Abschnitte (22a, 22b) ausgebildet ist.

7. Lagerhalterunterstützung nach Anspruch 6, **dadurch gekennzeichnet, dass** der Montageflansch (26b) des zweiten modularen Abschnitts (22b) zwei Sitze (50) umfasst, die bezüglich der Achse A einander gegenüberliegend platziert sind und sowohl radial als auch axial in Richtung zur Außenseite und in Richtung zum Montageflansch (26a) des ersten modularen Abschnitts (22a) geöffnet sind.

8. Lagerhalterunterstützung nach Anspruch 7, **dadurch gekennzeichnet, dass** der Montageflansch (26a) des ersten modularen Abschnitts (22a) zwei axiale rohrförmige Elemente (54) umfasst, die innerhalb der Sitze (50) angeordnet sind.

9. Lagerhalterunterstützung nach Anspruch 7, **dadurch gekennzeichnet, dass** das erste Zentrierelement (40a) ferner durch eine erste abgeschrägte Fläche (41'a) definiert ist, die innerhalb eines der beiden Sitze (50) aufgenommen ist.

10. Lagerhalterunterstützung nach Anspruch 8, **dadurch gekennzeichnet, dass** das zweite Zentrierelement (40b) ferner durch eine zweite abgeschrägte Oberfläche (41'b) definiert ist, die außerhalb eines der beiden axialen rohrförmigen Elemente (54) angeordnet ist, um sich an die der ersten abgeschrägten Fläche (41'a) anzupassen.

11. Lagerhalterunterstützung nach irgendeinem der vorangehenden Ansprüche, **dadurch gekennzeichnet, dass** jedes der Lager (23a, 23b) einen äußeren Laufring (33a, 33b) umfasst, der mit einer ringförmigen Nut (32) versehen ist, die sich in Richtung nach außen öffnet; wobei die ringförmige Nut (32) während des gemeinsamen Gießens der Lager (23a, 23b) mit dem jeweiligen Montageabschnitt mit Kunststoffmaterial gefüllt ist.

## Revendications

1. Support de palier (21, 21') pour éléments tournants, le support de palier (21, 21') étant adapté pour être engagé par un arbre, et comprenant deux roulements (23a, 23b) et un tube en plastique tubulaire (22) qui s'étend le long d'un axe longitudinal (A) de l'arbre et qui est constitué de deux parties modulaires (22a, 22b), chacune d'entre elles présentant un logement annulaire intérieur respectif (25a, 25b) pour loger lesdits deux roulements (23a, 23b), dans lequel chacun des deux logements annulaires (25a, 25b) est obtenu en moulant simultanément la partie modulaire respective (22a, 22b) avec un roulement respectif (23a, 23b) afin de bloquer axialement le roulement (23a, 23b) à l'intérieur du logement annulaire (25a, 25b) et dans lequel chacune desdites parties modulaires (22a, 22b) comprend une bride d'assemblage respective (26a, 26b), **caractérisé par** la bride d'assemblage (26a) de l'une des parties modulaires (22a) agencée de manière à buter axialement contre la bride d'assemblage (26b) de l'autre partie modulaire (22b) pour son assemblage avec l'autre partie modulaire (22b) au moyen de surfaces de contact des brides respectives s'étendant perpendiculairement à l'axe d'arbre (A).

2. Support de palier selon la revendication 1, **caractérisé par le fait que** chacune desdites parties modulaires (22a, 22b) comprend un élément de centrage respectif (40a, 40b) pour le centrage réciproque relativement audit axe longitudinal (A).

3. Support de palier selon la revendication 2, **caractérisé par le fait qu'**un premier élément de centrage (40a) est défini par un logement (41a) qui est obtenu à l'intérieur de la bride d'assemblage relative (26a) d'une première partie modulaire (22a) desdites deux parties modulaires (22a, 22b).

4. Support de palier selon la revendication 3, **caractérisé par le fait qu'**un deuxième élément de centrage (41b) est défini par une bague en porte-à-faux (41b) qui est intégrée à la partie extérieure de la bride d'assemblage relative (26b) de la deuxième partie modulaire (22b) desdites deux parties modulaires (22a, 22b).

5. Support de palier selon la revendication 3 ou 4, **caractérisé par le fait que** le logement du premier élément de centrage (40a) est cylindrique.

6. Support de palier selon la revendication 3, **caractérisé par le fait qu'**un deuxième élément de centrage (41b) est défini par un bord en porte-à-faux (41b) qui est intégré à la partie extérieure de la bride d'assemblage relative (26b) de la deuxième partie modulaire (22b) desdites deux parties modulaires (22a, 22b).

7. Support de palier selon la revendication 6, **caractérisé par le fait que** la bride d'assemblage (26b) de la deuxième partie modulaire (22b) comprend deux sièges (50) qui sont placés à l'opposé l'un de l'autre par rapport à l'axe A et qui sont ouverts à la fois radialement et axialement ves l'extérieur et vers la bride d'assemblage (26a) de la première partie modulaire (22a).

8. Support de palier selon la revendication 7, **caractérisé par le fait que** la bride d'assemblage (26a) de la première partie modulaire (22a) comprend deux éléments tubulaires axiaux (54) qui sont placés à l'intérieur des sièges (50).

9. Support de palier selon la revendication 7, **caractérisé par le fait que** le premier élément de centrage (40a) est également défini par une première surface conique (41'a) qui est logée à l'intérieur de l'un des deux sièges (50).

10. Support de palier selon la revendication 8, **caractérisé par le fait que** le deuxième élément de centrage (40b) est également défini par une deuxième surface conique (41'b) qui est placée à l'extérieur de l'un des deux éléments tubulaires axiaux (54) pour s'adapter à ladite première surface conique (41'a).

11. Support de palier selon l'une quelconque des revendications précédentes, **caractérisé par le fait que** chacun desdits roulements (23a, 23b) comprend un chemin de roulement extérieur (33a, 33b) qui est pourvu d'une gorge annulaire (32) ouverte radialement vers l'extérieur, ladite gorge annulaire (32) étant remplie de matière plastique pendant le moulage simultané du roulement (23a, 23b) et de la partie d'assemblage relative.
